(19) Europäisches Patentamt
European Patent Office
Office européen des brevets

(11) Publication number: 0 187 864 B1

(12) # EUROPEAN PATENT SPECIFICATION

(45) Date of publication of patent specification: **26.08.92**

(51) Int. Cl.5: **G05B 19/407**

(21) Application number: **85903379.7**

(22) Date of filing: **04.07.85**

(86) International application number: **PCT/JP85/00377**

(87) International publication number: **WO 86/00730 (30.01.86 86/03)**

(54) **ACCELERATION/DECELERATION CONTROL SYSTEM.**

(30) Priority: **04.07.84 JP 138270/84**

(43) Date of publication of application: **23.07.86 Bulletin 86/30**

(45) Publication of the grant of the patent: **26.08.92 Bulletin 92/35**

(84) Designated Contracting States: **DE FR GB**

(56) References cited:
**EP-A- 0 139 010**
**JP-A- 4 846 778**
**JP-A- 4 937 342**
**US-A- 3 512 066**

(73) Proprietor: **FANUC LTD.**
**3580, Shibokusa Aza-Komanba, Oshino-mura**
**Minamitsuru-gun, Yamanashi 401-05(JP)**

(72) Inventor: **NAKASHIMA, Seiichiro**
**3-2, Hinohon-cho 5-chome Hino-shi**
**Tokyo 191(JP)**
Inventor: **TOYODA, Kenichi**
**17-25, Shinmei 1-chome Hino-shi**
**Tokyo 191(JP)**
Inventor: **SAKAKIBARA, Shinsuke**
**Mezon Izumi 23-3, Higashiizumi 1-chome**
**Komae-shi**
**Tokyo 201(JP)**

(74) Representative: **Billington, Lawrence Emlyn et al**
**HASELTINE LAKE & CO Hazlitt House 28**
**Southampton Buildings Chancery Lane**
**London WC2A 1AT(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services

## Description

The present invention relates to a drive system comprising an acceleration and deceleration system, and more particularly but not necessarily exclusively an acceleration and deceleration system for an electric motor employed to drive a movable member of a machine tool, a robot hand, or the like.

Movable members of machine tools, robot hands, or the like are generally driven by electric motors such as servomotors. When driving a movable member of a machine tool or moving a robot hand, the electric motor is generally accelerated or decelerated in a manner so as not to apply a shock or vibration to the mechanical system at the time the motor starts to rotate or is stopped. As one acceleration and deceleration system, there is known a system for exponentially increasing or decreasing the rate of a pulse for controlling the servomotor, as shown in FIG. 5.

In such an exponential acceleration and deceleration system, the acceleration and deceleration control may be carried out entirely irrespectively of interpolation, and if interpolation is simply started, acceleration is caused, whereas if interpolation is finished, deceleration results. The exponential acceleration and deceleration system is advantageous in that the interpolator and the acceleration and deceleration circuit are simple in arrangement. Since, however, this system involves an inherent lag upon acceleration and deceleration, the lags of the axes cannot be equalized in circular interpolation under two-axis control, resulting in a disadvantage in that a path after acceleration and deceleration is subjected to an error.

To eliminate such a difficulty, there has been proposed an acceleration and deceleration system for reducing a path error after acceleration and deceleration in circular interpolation and for effecting linear acceleration and deceleration as shown in FIG. 3 in a time of a given time constant (see Japanese Patent Application No. 57-172863, for example).

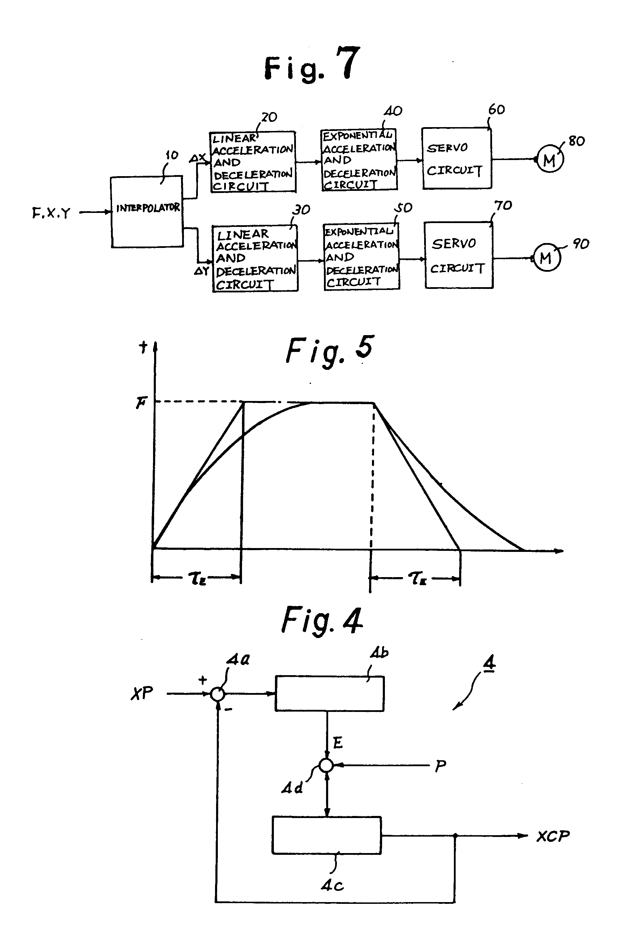

However, as is apparent from FIG. 3, the linear acceleration and deceleration system is problematic in that the controlled speed is not smooth and is subject to abrupt changes as compared with the exponential acceleration and deceleration control, and the mechanical system suffers shocks or vibration as the speed goes through the abrupt changes when an axis starts moving or is decelerated.

An earlier attempt to provide an acceleration and deceleration system capable of smoothly and accurately driving a mechanical system is disclosed in US-A-3512066, which provides a drive system according to the precharacterising parts of attached claims 1 and 2. In US-A-3512066 the signal shaping circuit rounds corners of pulses incoming thereto, but the pulses are disadvantageously shortened.

According to the present invention there is provided a drive system for a movable member, comprising an electric motor, a linear acceleration and deceleration circuit having an input for receiving motor control data based on a feed speed command signal and a displacement command signal for controlling the movable member, and a signal shaping circuit connected to the output of the linear circuit, said circuits being cooperable to increase progressively the feed speed of the movable member up to the command speed and then progressively to reduce said feed speed, the rates of increase and decrease being dependent upon the operating characteristic of the signal shaping circuit which is operable to round angular corners of the pulse from the linear circuit, characterised in that the motor is a servomotor controlled by a servo circuit connected to the output of the signal shaping circuit, the input of the linear acceleration and deceleration circuit is connected to receive the speed command signal from a pulse distributor, and the signal shaping circuit is an exponential acceleration and deceleration circuit operable to round said angular corners exponentially such that the trailing edge of the pulse from the linear circuit is shaped by the signal shaping circuit to fall initially steeply and then less steeply exponentially before being applied to the servo circuit.

According to a drive system of the invention abrupt changes in the controlled speed, which were a disadvantage of the previous linear acceleration and deceleration circuits, are reduced by an exponential acceleration and deceleration circuit of the present invention to prevent shocks from being produced when an axis starts moving and is decelerated, and to perform smooth and accurate acceleration and deceleration control.

Brief Description of the Drawings.

Fig. 1 is a block diagram of a drive system according to the present invention; Fig. 2 is a block diagram of a linear acceleration and deceleration circuit; Fig. 3 is a diagram showing operating characteristics of the linear acceleration and deceleration circuit; Fig. 4 is a block diagram of an exponential acceleration and deceleration circuit; Fig. 5 is a diagram showing operating characteristics of the exponential acceleration and deceleration circuit; Fig. 6 is a diagram illustrative of operating characteristics of the acceleration and deceleration system of the present invention; and Fig. 7 is a block diagram of an embodiment in which the present invention is applied to a two-axis control servo circuit.

An example of the present invention will hereinafter be described in specific detail with reference to an embodiment shown in Fig. 1.

Fig. 1 is a block diagram explanatory of an acceleration and deceleration circuit in a drive system according to the present invention. Denoted at 3 is a linear acceleration and deceleration circuit, and 4 an exponential acceleration and deceleration circuit. According to the present invention, the linear acceleration and deceleration circuit 3 is followed by and connected in series with the exponential acceleration and deceleration circuit 4. A pulse distributor 5 in a servo system, for example, for issuing a signal as a speed commmand is connected in series with the input terminal of the linear acceleration and deceleration circuit 3, and the output terminal of the exponential acceleration and deceleration circuit is connected to a servo circuit 6. A servomotor 7 is controlled by the servo circuit 6.

As shown in Fig. 2, the linear acceleration and deceleration circuit 3 is supplied with a signal ΔX as a speed command produced from the pulse distributor 5. The linear acceleration and deceleration circuit 3 has n (n is equal to $\tau L/T$ where $\tau L$ is a time constant and T is a sampling time) buffer registers #1, #2, ... #(n - 1), #n, an adder ADD, an accumulator ACC for temporarily storing the sum from the adder ADD, a register SUM for transferring the sum, and a divider DIV for dividing the sum by n. The buffer registers #1 through #n are connected in series. In each sampling cycle, the latest interpolation data ΔX is stored in the buffer register #1, and the content of each buffer register is transferred to a next buffer register, while the content ΔXo of the final buffer register #n is applied to the adder ADD.

At a certain sampling time, the adder ADD effects the computation:

$$\Delta Xn - \Delta Xo + St \rightarrow St$$

where St is the content of the register SUM, and stores the result in the accumulator ACC. The content of the accumulator ACC is divided by the divider DIV by n, and the quotient is issued as pulses XP. At the same time, the content of each buffer register #1 through #n is shifted to a next buffer register, ΔX is stored in the first buffer register #1, and the content St of the accumulator ACC is transferred to the register SUM. The linear acceleration and deceleration circuit 3 itself has acceleration and deceleration operation characteristics as shown in Fig. 3.

As illustrated in Fig. 4, the exponential acceleration and deceleration circuit 4 comprises a combination circuit 4a for combining pulses XP produced from the linear acceleration and deceleration circuit 3 and output pulses XCP from the exponential acceleration and deceleration circuit 4 itself, a register 4b for accumulating pulses issued from the combination circuit 4a, an accumulator 4c, and an adder 4d for adding the content E of the register 4b and the content of the accumulator 4c each time a pulse P of a fixed rate Fc is generated and for setting the sum in the accumulator 4c.

Operation of the exponential acceleration and deceleration circuit 4 will be described below.

Assuming that the rate of pulses XP applied to the exponential acceleration and deceleration circuit 4 is F and the rate of output pulses XCP therefrom is Fo, the following equations are established:

$$dE/dt = F - Fo \quad (1)$$

$$Fo = (Fc/2^n) \cdot E \quad (2)$$

The number of bits in the accumulator 4 is n. The equation (1) is indicative of an increment per unit time in the register 4b, and the equation (2) is representative of the number of carry pulses (output pulses XCP) issued per unit time from the accumulator 4c. From these equations (1), (2), the pulse speed Fo is determined by:

$$Fo = F [1 - \exp(-Kt)] \quad (3)$$

where K = a constant. The output pulse speed Fo is exponentially increased at a start, and exponentially reduced at a stop as shown in Fig. 5. When the time constant is $\tau E$, the contant K is equal to $1/\tau E$.

The output terminal of the exponential acceleration and deceleration circuit 4 is connected to the servo circuit 6 to apply the output pulses XCP to the servo circuit 6. The servo circuit 6 is responsive to the output pulses XCP from the exponential acceleration and deceleration circuit 4 to drive the servomotor 7.

Operation of the acceleration and deceleration system shown in Fig. 1 will then be described below.

Pulses based on data in each sampling cycle, which are issued from the pulse distributor 5, are applied to the linear acceleration and deceleration circuit 3, which then effects the linear acceleration and deceleration control as shown in Fig. 3. The output pulse which is subjected to the linear acceleration and deceleration control is applied to the exponential acceleration and deceleration circuit 4. As shown in Fig. 5, the varying rate of the exponential acceleration and deceleration circuit 4 upon acceleration and deceleration is not abruptly changed. Therefore, as illustrated in Fig. 6, the acceleration and deceleration characteristics of the pulse XCP issued from the exponential acceleration and deceleration circuit 4 are controlled so that the angular corners of the pulse shape are rounded.

The acceleration and deceleration system according to the present invention can shorten a positioning time by selecting the time constant $\tau E$ of the exponential acceleration and deceleration circuit 4 to be small as compared with the time constant $\tau L$ of the linear acceleration and deceleration circuit 3.

An embodiment in which the present invention is applied to an X-Y-axis, or two-axis speed control circuit in a numerical control apparatus will be described below.

Designated at 10 in Fig. 7 is an interpolator for displacement components $\Delta X$, $\Delta Y$ in the directions of the X- and Y-axes by using a feed speed F indicated by a control signal from the numerical control apparatus (not shown), a displacement X of the X-axis, and a displacement Y of the Y-axis. The interpolation data signals $\Delta X$, $\Delta Y$ are applied respectively to an X-axis linear acceleration and deceleration circuit 20 and a Y-axis linear acceleration and deceleration circuit 30. The linear acceleration and deceleration circuits 20, 30 are identical to the linear acceleration and deceleration circuit 3 shown in Fig. 2 and operate in the same manner. Denoted at 40, 50 are exponential acceleration and deceleration circuits which are identical to the exponential acceleration and deceleration circuit 4 shown in Fig. 1 and operate in the same manner. Output pulses XCP, YCP issued from the exponential acceleration and deceleration circuits 40, 50 are applied respectively to X- and Y-axis servo circuits 60, 70, which control servo motors 80, 90, respectively, based on the applied command signals in the form of the output pulses XCP, YCP. The speed command signals comprising the pulses $\Delta X$, $\Delta Y$ issued from the interpolator 10 for the X- and Y-axis directions are controlled to have substantially the same acceleration and deceleration characteristics as shown in Fig. 3. Pulses XP, YP produced from the linear acceleration and deceleration circuits 20, 30 are applied to the exponential acceleration and deceleration circuits 40, 50. The exponential acceleration and deceleration circuits 40, 50 operate to round only angular portions of the acceleration and deceleration characteristics so that the acceleration and deceleration characteristics will not be abruptly changed when the servomotors 80, 90 are accelerated and decelerated. In this embodiment, where circular interpolation is effected by two-axis control, errors in circular interpolation which are a drawback of the exponential acceleration and deceleration control system are prevented from occuring, and shocks which are a shortcoming of the linear acceleration and deceleration control system are prevented from being caused when an axis starts being moved and is decelerated, with the consequence that smooth and accurate acceleration and deceleration control can be carried out.

Industrial Applicability

According to the present invention, as described above, acceleration and deceleration control of an electric motor can smoothly be performed, and the motor can be driven without imposing shocks and vibration to a mechanical system. The present invention is preferably used in acceleration and deceleration control of electric motors for use in machine tools controlled by numerical control apparatus and robots.

## Claims

1. A drive system for a movable member, comprising an electric motor (7), a linear acceleration and deceleration circuit (3) having an input for receiving motor control data based on a feed speed command signal and a displacement command signal for controlling the movable member, and a signal shaping circuit (4) connected to the output of the linear circuit (3), said circuits (3,4) being cooperable to increase progressively the feed speed of the movable member up to the command speed and then progressively to reduce said feed speed, the rates of increase and decrease being dependent upon the operating characteristic of the signal shaping circuit (4) which is operable to round angular corners of the pulse from the linear circuit (3), characterised in that the motor (7) is a servomotor controlled by a servo circuit (6) connected to the output of the signal shaping circuit (4), the input of the linear acceleration and deceleration circuit (3) is connected to receive the speed command signal from a pulse distributor (5), and the signal shaping circuit (4) is an exponential acceleration and deceleration circuit operable to round said angular corners exponentially such that the trailing edge of the pulse from the linear circuit (3) is shaped by the signal shaping circuit (4) to fall initially steeply and then less steeply exponentially before being applied to the servo circuit (6).

2. A two-axis drive system for a movable member, having for each axis a respective drive system according to claim 1, and wherein the inputs of the two linear acceleration and deceleration circuits (20,30) are connected to receive interpolation data on the respective axis from an interpolator (10).

3. A drive system for a movable member according to claim 1 or 2, wherein the or each linear acceleration or deceleration circuit (3,20,30) comprises an input coupled to an adder (ADD) both directly and also negatively by a series connection of a plurality of buffer registers 1 to n, the adder (ADD) supplying the output signal of the circuit through an accumulator (ACC), for temporarily storing the sum from the adder (ADD), followed by a divider (DIV) for dividing the sum by n, the circuit further comprising a register (SUM) coupled from the output of the accumulator (ACC) to the adder (ADD).

4. A drive system for a movable member according to any preceding claim, wherein the or each signal shaping circuit (4,40,50) comprises an input coupled to a combination circuit (4a) having an output connected to a register (4b) for accumulating pulses issued from the combination circuit (4a), an accumulator (4c) supplying the output of the signal shaping circuit, and an adder (4d) for adding the contents of the register (4b) and the accumulator (4c) each time a fixed rate pulse (P) is generated, the sum being set in the accumulator (4c), and wherein the output of the accumulator (4c) is fed back negatively to the combination circuit (4a).

**Patentansprüche**

1. Ein Antriebssystem für ein bewegbares Teil, das aufweist, einen Elektromotor (7),
eine lineare Beschleunigungs- und Verzögerungsschaltung (3), die einen Eingang zum Empfang von Motorsteuerdaten auf der Grundlage eines zugeführten Geschwindigkeitsführungssignals und eines Verschiebungsführungssignals zur Steuerung des bewegbaren Teiles aufweist und
eine signalformende Schaltung (4), die mit dem Ausgang der linearen Schaltung (3) verbunden ist,
wobei die Schaltungen (3,4) zusammenwirken können, um die zugeführte Geschwindigkeit des bewegbaren Teiles bis zu der Führungsgeschwindigkeit zunehmend zu erhöhen und dann die zugeführte Geschwindigkeit zunehmend zu erniedrigen,
wobei der Betrag der Zunahme und Abnahme von der Betriebskennlinie der signalformenden Schaltung (4) abhängen, die betreibbar ist, um kantige Ecken der Pulse von der linearen Schaltung (3) abzurunden,
**dadurch gekennzeichnet**,
daß der Motor (7) ein durch eine Servoschaltung (6) gesteuerter Servomotor ist, der mit dem Ausgang der signalformenden Schaltung (4) verbunden ist,
wobei der Eingang der linearen Beschleunigungs- und Verzögerungsschaltung (3) so geschaltet ist, daß diese das Geschwindigkeitsführungssignal von einem Pulsverteiler (5) empfängt, und die signalformende Schaltung (4) eine exponentielle Beschleunigungs- und Verzögerungsschaltung ist, die betreibbar ist, um eckige Kanten so exponentiell abzurunden, daß die hintere Flanke des Pulses von der linearen Schaltung (3) von der signalformenden Schaltung (4) bevor sie der Servoschaltung (6) zugeführt wird so geformt wird, daß sie zunächst steil und dann weniger steil exponentiell abfällt.

2. Ein Zwei-Achsen-Antriebssystem für ein bewegbares Teil, das für jede Achse ein entsprechendes Antriebssystem entsprechend Anspruch 1 aufweist,
und bei welchem die Eingänge der beiden linearen Beschleunigungs- und Verzögerungsschaltungen (20,30) so geschaltet sind, daß sie Interpolationsdaten der entsprechenden Achse von einem Interpolator (10) empfangen.

3. Ein Antriebssystem für ein bewegbares Teil entsprechend Anspruch 1 oder 2,
bei dem die oder jede lineare Beschleunigungs- und Verzögerungsschaltung (3,20,30) aufweist:
einen Eingang, der an einen Addierer (ADD) sowohl direkt als auch invertiert über eine Serienschaltung aus mehreren Pufferregistern 1 bis n gekoppelt ist, wobei der Addierer (ADD) das Ausgangssignal der Schaltung über einen Akkumulator (ACC) zur temporären Speicherung der Summe des Addierers (ADD) gefolgt von einem Dividierer (DIV) zur Division der Summe durch n zur Verfügung stellt,
wobei die Schaltung weiterhin ein Register (SUM) aufweist, das den Ausgang des Akkumulators (ACC) mit dem Addierer (ADD) verbindet.

4. Ein Antriebssystem für ein bewegbares Teil entsprechend einem der vorangehenden Ansprüche,
wobei die oder jede signalformende Schaltung (4,40,50) aufweist:
einen Eingang, der an eine Kombinationsschaltung (4a) gekoppelt ist, die einen Ausgang aufweist, der mit einem Register (4b) verbunden ist zum Akkumulieren von Pulsen, die von der Kombinationsschaltung (4a) ausgegeben werden,
einen Akkumulator (4c), der das Ausgangssignal der signalformenden Schaltung zur Verfügung stellt, und
einen Addierer (4d) zum Addieren der Inhalte des Registers (4b) und des Akkumulators (4c), wobei jedesmal, wenn ein Puls mit fester Rate (P) erzeugt wird, die Summe in den Akkumulator (4c) geschrieben wird und dabei der Ausgang des Akkumulators (4c) invertiert zu der Kombinationsschaltung (4a) zurückgeführt wird.

**Revendications**

1. Un système de commande pour un organe mobile comprenant un moteur électrique (7), un circuit (3) à accélération et décélération linéaire présentant une entrée pour recevoir des données de commande du moteur sur la base d'un signal d'ordre de vitesse d'avance et d'un signal d'ordre de déplacement pour commander l'organe mobile, et un circuit (4) de mise en forme de signaux relié à la sortie du circuit linéaire (3), lesdits circuits (3, 4) pouvant coopérer pour augmenter progressivement la vitesse d'avance de l'organe mobile jusqu'à la vitesse d'ordre et réduire ensuite progressivement ladite vitesse d'avance, le taux d'augmentation et de diminution dépendant de la caractéristique de fonctionnement du circuit (4) de mise en forme de signaux qui peut fonctionner pour arrondir des coins angulaires de l'impulsion provenant du circuit linéaire (3), caractérisé en ce que le moteur (7) est un servomoteur commandé par un circuit d'asservissement (6) relié à la sortie du circuit (4) de mise en forme de signaux, l'entrée du circuit (3) d'accélération et de décélération linéaire est reliée pour recevoir le signal d'ordre de vitesse provenant d'un distributeur d'impulsions (5), et le circuit de mise en forme de signaux (4) est un circuit d'accélération et de décélération exponentiel actionnable pour arrondir de manière exponentielle lesdits coins angulaires de telle sorte que le bord arrière de l'impulsion provenant du circuit linéaire (3) est mis en forme par le circuit (4) de mise en forme de signaux pour retomber tout d'abord en pente rapide puis ensuite en pente moins rapide de manière exponentielle avant d'être appliqué au circuit d'asservissement (6).

2. Un système de commande à deux axes pour un organe mobile, présentant pour chaque axe un système de commande respectif selon la revendication 1, et dans lequel les entrées des deux circuits (20, 30) d'accélération et de décélération linéaires sont reliées pour recevoir des données d'interpolation sur l'axe correspondant en provenance d'un interpolateur (10).

3. Un système de commande pour un organe mobile selon la revendication 1 ou 2, dans lequel le ou chaque circuit (3, 20, 30) à accélération ou décélération linéaire comprend une entrée couplée à un additionneur (ADD) à la fois de façon directe et également de façon négative par une liaison série d'un ensemble de registres tampons 1 à n, l'additionneur (ADD) fournissant le signal de sortie du circuit par l'intermédiaire d'un accumulateur (ACC), afin de stocker temporairement la somme provenant de l'additionneur (ADD), suivi par un diviseur (DIV) pour diviser la somme par n, le circuit comprenant en outre un registre (SUM) couplé depuis la sortie de l'accumulateur (ACC) jusqu'à l'additionneur (ADD).

4. Un système de commande pour un organe mobile selon une revendication précédente quelconque, dans lequel le ou chaque circuit (4, 40, 50) de mise en forme de signaux comprend une entrée couplée à un circuit à combinaison (4a) présentant une sortie reliée à un registre (4b) pour accumuler des impulsions issues du circuit à combinaison (4a), un accumulateur (4c) fournissant la sortie du circuit de mise en forme de signaux, et un additionneur (4d) pour ajouter les contenus du registre (4b) et de l'accumulateur (4c) à chaque fois qu'est formée une impulsion (P) de taux fixe, la somme étant réglée dans l'accumulateur (4c), et dans lequel la sortie de l'accumulateur (4c) est appliquée négativement en contre-réaction au circuit à combinaison (4a).

*Fig. 1*

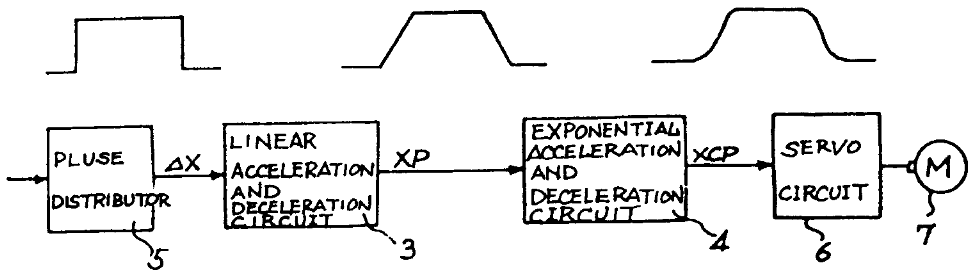


*Fig. 6*

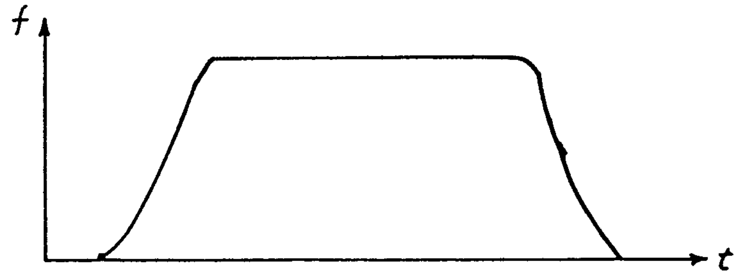


*Fig. 3*

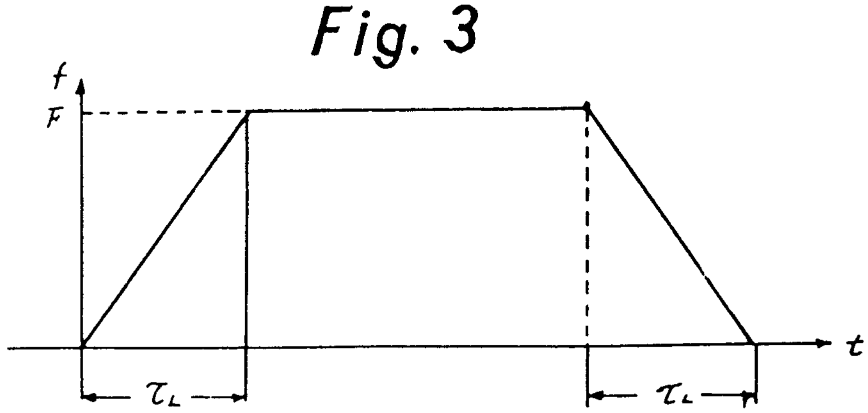

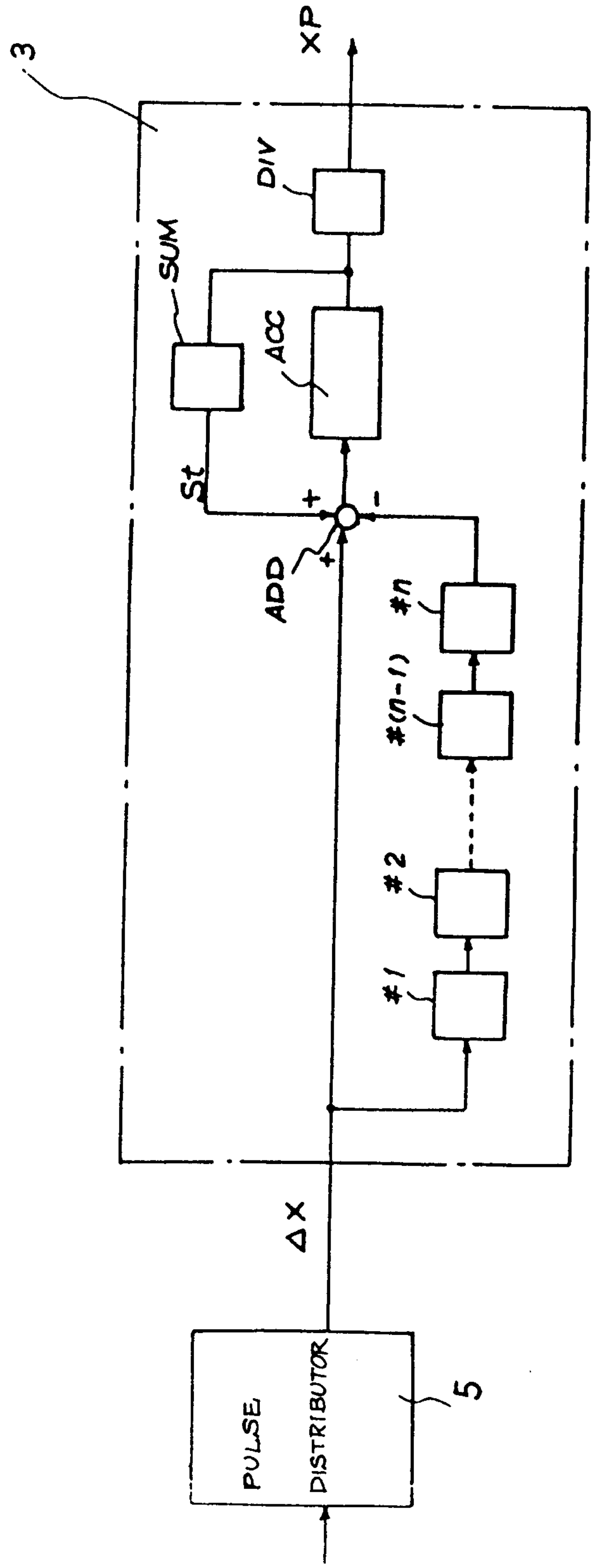


Fig. 2

Fig. 7

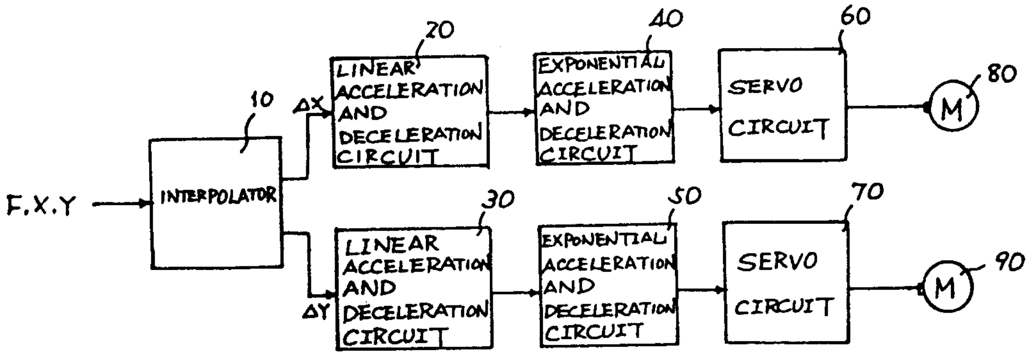


Fig. 5

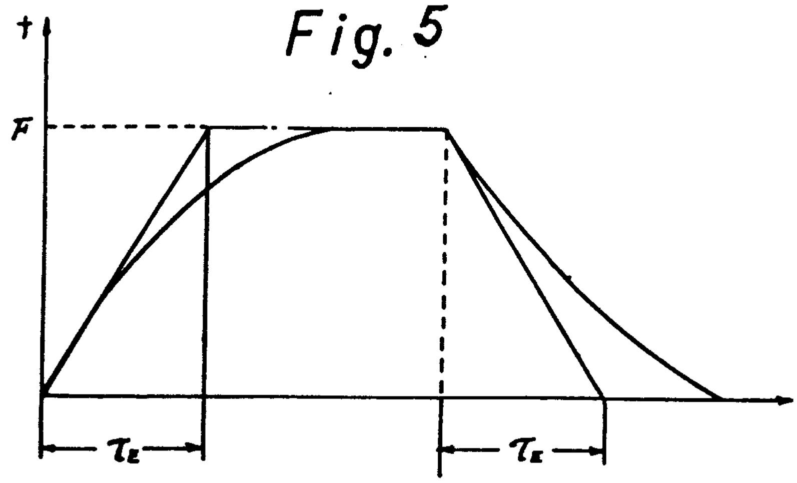


Fig. 4